Europäisches Patentamt

European Patent Office

Office européen des brevets

(11) Numéro de publication: **0 473 496 B1**

(12) **FASCICULE DE BREVET EUROPEEN**

(45) Date de publication de fascicule du brevet: **05.07.95** (51) Int. Cl.⁶: **B29D 11/00**, G02F 1/35, G02F 1/01

(21) Numéro de dépôt: **91402282.7**

(22) Date de dépôt: **21.08.91**

(54) **Procédé de fabrication d'un guide d'onde optique monomode en polymère doué de propriétés électrooptiques, ainsi qu'un tel guide d'onde optique.**

(30) Priorité: **24.08.90 FR 9010635**

(43) Date de publication de la demande:
**04.03.92 Bulletin 92/10**

(45) Mention de la délivrance du brevet:
**05.07.95 Bulletin 95/27**

(84) Etats contractants désignés:
**DE FR GB**

(56) Documents cités:
**EP-A- 0 151 363**
**EP-A- 0 232 138**
**EP-A- 0 265 921**
**WO-A-88/02131**
**WO-A-89/03054**

**GLASS TECHNOLOGY vol. 28, no. 1, Février 1987, SHEFFIELD pages 38 - 42; POIGNANT ET ALIA: 'THE PREPARATION OF FLUORIDE GLASS SINGLE MODE FIBRES'**

**APPLIED OPTICS vol. 20, no. 8, Avril 1981, pages 1403 - 1406; J.M.DZIEDZIC ET ALIA: 'OPTICAL KERR EFFECT IN LONG FIBERS'**

(73) Titulaire: **FRANCE TELECOM**
**6, Place d'Alleray**
**F-75015 Paris (FR)**

(72) Inventeur: **Bosc, Dominique**
**5 Park an Denved Kerligonan**
**F-22300 Lannion (FR)**
Inventeur: **Guilbert, Martine**
**4 Lot. Pen-Lan**
**F-22560 Trebeurden (FR)**
Inventeur: **Toinen, Christian**
**Kerjean Tonquedec**
**F-22140 Begard (FR)**

(74) Mandataire: **Martin, Jean-Jacques et al**
**Cabinet REGIMBEAU**
**26, Avenue Kléber**
**F-75116 Paris (FR)**

**Description**

La présente invention concerne un procédé de fabrication d'un guide d'onde optique cylindrique monomode en polymère, un tel guide d'onde permettant une modulation, par effet électrooptique, de l'onde lumineuse qu'il transmet. Elle concerne également un tel guide d'onde doué de propriétés électrooptiques.

L'invention trouve une application particulièrement avantageuse dans le domaine des télécommunications par fibres optiques, et, notamment, dans celui des fibres optiques fonctionnant dans le proche infrarouge, par exemple entre 0,6 $\mu$m et 2 $\mu$m.

Le problème technique général qui se pose à tous les dispositifs de télécommunications par fibres optiques est de transmettre l'information que l'on désire véhiculer, sous forme d'une modulation de phase ou d'amplitude de l'onde porteuse, ici l'onde lumineuse. Il est donc nécessaire de disposer de moyens capables de produire la modulation recherchée, ou, d'une façon plus générale, de modifier les propriétés de propagation de la lumière dans un réseau de fibres optiques.

Une solution connue a ce problème technique consiste à utiliser les propriétés non linéaires de la susceptibilité électrique de certains matériaux. L'application d'un fort champ électrique sur un matériau de ce type provoque une variation de l'indice de réfraction du milieu qui modifie la phase de l'onde lumineuse. Si ce champ est modulé, le système fonctionne comme un modulateur de phase, ou d'amplitude par interférence avec une onde de phase fixe. On connaît des modulateurs électrooptiques fabriqués à partir de monocristaux minéraux, comme le KDP, le niobate de lithium ($LiNbO_3$) ou l'arséniure de gallium par exemple. Cependant, ces matériaux sont d'une cristallogénèse souvent délicate à mettre en oeuvre, et, de plus, ils exigent généralement d'être conditionnés sous forme de guides d'onde optique afin de pouvoir être intégrés dans un ensemble de télécommunications par fibres. C'est pourquoi, ces composants, quoique très efficaces, sont très chers, leur prix étant prohibitif à leur emploi dans un réseau de fibres optiques. Aussi, les fonctions de modulation se font parfois à la source, c'est-à-dire par modulation directe, avec l'inconvénient que les conversions électrooptiques loin des émetteurs sont limitées.

Plus récemment, des essais ont été réalisés pour obtenir des effets électrooptiques, effet Kerr notamment, avec des fibres de silice, voir par exemple l'article de J.M. Dziedzic et al "Optical Kerr effect in long fibers" paru dans Applied Optics, 20 (8), 1405 (1981). Toutefois, la silice ayant de très faibles susceptibilités électriques d'ordre supérieur, en particulier la susceptibilité d'ordre 3 impliquée dans l'effet Kerr, les longueurs d'interaction entre la fibre et le champ électrique doivent être considérables, de 30 à 50 m, ce qui se traduit par des bandes passantes très étroites, liées au temps de transit de l'onde optique dans la zone d'interaction. A titre d'exemple, pour 50 m de silice, le temps de transit est de 2,5 $\mu$s.

L'apparition de fibres optiques polymères, dont un mode de réalisation avangeux est donné dans le brevet n° 2.557.495 correspondant à la demande de brevet européen EP-151.363, offre de nouvelles possibilités intéressantes dans la perspective d'obtenir des guides d'onde optique à effets électrooptiques intenses, dans la mesure où des molécules organiques, telles que le 2 Méthyl 4-Nitroaniline, le DEANS (4-diéthylamino-4'-nitrostilbène), le Disperse Red 1 (4-[N-éthyl-N-(2-hydroxyéthyl)] amino-4'-nitroazobenzène), le NPP N-(4-nitrophényl-L-piolinol), ou d'autres encore, peuvent présenter des susceptibilités électriques non linéaires de deux ordres de grandeurs supérieures à celles de la silice par exemple. Toutefois, même si la demande de brevet FR-2.657.556, déposée le 26 janvier 1990 et publiée le 2 août 1991, fait référence à un procédé de fabrication d'une fibre optique polymère monomode, aucune description n'a été donnée de telle fibres capables de produire des effets électrooptiques.

Le procédé décrit dans EP-151.363 comprend les étapes de :
- réalisation d'un barreau cylindrique de coeur par polymérisation d'un mélange polymérisable comprenant notamment un polymère de coeur,
- constitution d'une première préforme par enrobage du barreau cylindrique de coeur à l'aide d'une gaine optique formée par un polymère de gaine.

Le problème technique à résoudre par l'objet de la présente invention est de proposer un procédé de fabrication d'un guide d'onde optique cylindrique en polymère, conforme au préambule, qui permettrait d'obtenir un guide d'onde optique monomode ayant un fort pouvoir électrooptique, tout en assurant les caractéristiques géométriques compatibles avec l'unimodalité et en respectant les exigences de la connectabilité aux fibres optiques monomodes standard en silice, à savoir essentiellement la concentricité du coeur du guide par rapport au guide lui-même.

Selon l'invention, le problème précité est résolu en ce que le barreau cylindre de coeur comporte également une substance organique électrooptiquement active, telle que le coeur présente une activité optique sous l'action d'un champ électrique extérieur, ledit guide d'onde étant monomode et permettant une modulation par effet électrooptique de l'onde lumineuse qu'il transmet, ledit procédé comportant en outre les étapes suivantes :

2

- emboîtement de ladite première préforme dans un premier tube constitué par un polymère de tube,
- réalisation d'une deuxième préforme par étirage partiel du premier tube contenant la première préforme,
- emboîtement de la deuxième préforme dans un deuxième tube en polymère de tube,
- fibrage du deuxième tube ainsi préparé jusqu'à ce que le diamètre de coeur ait la dimension requise pour que le guide d'onde optique obtenu soit monomode,
- réalisation d'électrodes de polarisation et d'excitation de la substance électrooptiquement active.

Dans la suite de ce mémoire, on entendra par fibrage d'un tube la réduction du diamètre dudit tube aux dimensions d'une fibre optique par étirage à chaud.

De même, un guide d'onde optique monomode en polymère est, selon l'invention, remarquable en ce qu'il comporte :

- un coeur constitué par un mélange comprenant notamment un polymère de coeur et une substance organique électrooptiquement active telle que le coeur présente une activité optique sous l'action d'un champ électrique extérieur, le diamètre de coeur ayant la dimension requise pour que le guide d'onde optique soit monomode,
- une gaine optique en polymère de gaine entourant le coeur ;
- des électrodes de polarisation et d'excitation de la substance optiquement active.

Ainsi, du fait qu'il peut être fabriqué en grande série à partir de matériaux de base bon marché, le guide d'onde optique réalisé selon le procédé, objet de l'invention, est d'un prix de revient relativement peu élevé. D'autre part, les propriétés électrooptiques de la substance organique active pouvant être très importantes, il est possible, pour un même effet, de réduire notablement la longueur d'interaction correspondant à une tension crête de commande donnée, ou inversement de diminuer la tension crête pour une longueur d'interaction donnée. Un autre avantage offert par la possibilité de disposer d'un fort pouvoir électrooptique réside dans l'augmentation considérable de la bande passante du guide d'onde optique qui, dans certaines conditions, pourrait dépasser le gigahertz. Enfin, il faut souligner que le procédé selon l'invention conduit à un guide d'onde optique monomode présentant une excellente concentricité des diamètres de coeur et de guide, répondant aux conditions d'adaptation aux connecteurs "fibres optiques" utilisés de façon standard.

Les effets électrooptiques considérés ici sont de deux types : l'effet Pockels qui met en jeu la susceptibilité électrique d'ordre 2, $X^{(2)}$, du matériau et produit une variation d'indice du milieu proportionnelle à $X^{(2)}E$, E étant le champ électrique appliqué, tandis que la variation d'indice résultant de l'effet Kerr est proportionnelle à $X^{(3)}E^2$, $X^{(3)}$ étant la susceptibilité d'ordre 3 du matériau. Dans certains cas, les effets d'ordre 3 sont insuffisants ou parfois masqués par des phénomènes non électroniques qui ne sont pas assez rapides, comme dans les molécules polaires par exemple. C'est pourquoi il y a avantage, afin notamment de pouvoir moduler la lumière à haute fréquence, à renforcer les propriétés quadratiques de la substance active en faveur de l'effet Pockels électrooptique. Dans ce but, il est prévu que, une fois la fibre monomode obtenue, les molécules de la substance organique électrooptiquement active à l'intérieur du coeur sont orientées à une température proche de la température de transition vitreuse du polymère de coeur sous l'action d'un champ électrique qui est ensuite maintenu jusqu'au retour à la température ambiante.

Les polymères pouvant être utilisés pour constituer le coeur du guide d'onde optique sont, par exemple, les polymères méthacryliques, le polyméthylméthacrylate en particulier, les $\alpha$-haloacrylates, les polymères styréniques, les carbonates et les carbonates de vinyle, qui présentent une température de transition vitreuse Tg supérieure à 80°C et une température de fibrage comprise entre 150 et 300°C.

La substance organique électrooptiquement active doit posséder des susceptibilités électriques d'ordre 2 ou 3 importantes. Ce type de substance est caractérisé par un groupe fortement donneur d'électrons relié à un groupe attracteur par un système conjugué qui, de ce fait, a une forte susceptibilité $X^{(2)}$, ou encore par des molécules fortement conjuguées comme les polyalkylthiophènes, les polydiacétylènes et d'autres polymères conjugués qui présentent une susceptibilité $X^{(3)}$ électronique importante.

Ces substances actives peuvent être des molécules simples ou des monomères copolymérisables avec le monomère du coeur. Dans les deux cas, il faut que la molécule active soit soluble dans le monomère de coeur jusqu'à la quantité nécessaire pour assurer l'efficacité du polymère final. Des précautions doivent être prises pour que la substance électrooptiquement active n'inhibe pas la polymérisation, ne se transforme pas au cours de la polymérisation, et ne provoque pas de réticulation du polymère de coeur en formation ou déjà formé, lors du fibrage par exemple.

La substance organique active peut être ajoutée au polymère de coeur de différentes manières : soit par simple adjonction physique dans le polymère, c'est ce qu'on appelle les structures "guest-host", ou bien par greffage chimique sur le polymère ou le monomère à polymériser.

La description qui va suivre en regard des dessins annexés, donnés à titre d'exemples non limitatifs, fera bien comprendre en quoi consiste l'invention et comment elle peut être réalisée.

La figure 1 est une représentation schématique des étapes du procédé selon l'invention.

La figure 2 donne le schéma de deux modes de mise en oeuvre d'un guide de lumière réalisé à l'aide du procédé selon l'invention.

La figure 3 est une vue en perspective d'un guide de lumière présentant des électrodes de polarisation et d'excitation déposées sur des méplats.

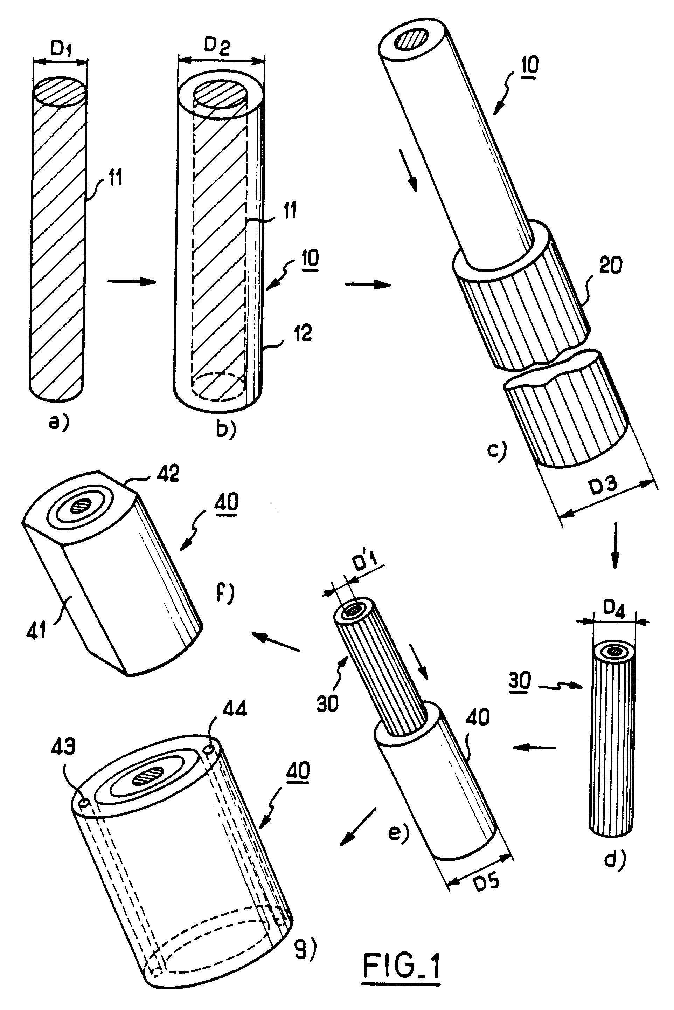

Le procédé de fabrication d'un guide d'onde optique cylindrique monomode en polymère, un tel guide d'onde permettant une modulation, par effet électrooptique, de l'onde lumineuse qu'il transmet, ce procédé, représenté schématiquement sur la figure 1, comprend une première étape de réalisation d'un barreau cylindrique 11 de coeur par polymérisation d'un mélange polymérisable comprenant notamment un polymère de coeur et une substance organique électrooptiquement active telle que le coeur présente une activité optique sous l'action d'un champ électrique extérieur.

Le polymère de coeur est réalisé, par exemple, à partir d'un mélange de deux monomères : du méthylméthacrylate et de l'éthylméthacrylate à raison de 100/0 à 80/20 moles par moles. La substance électrooptiquement active est, d'une façon générale, composée d'une molécule telle que le polymère de coeur présente une susceptibilité d'ordre 2 supérieure à $3,3.10^{-14}$ MKSA, après une opération d'orientation décrite en détail plus loin, ou une susceptibilité d'ordre 3 supérieure à $1,1.10^{-19}$ MKSA, à la longueur d'onde considérée. Parmi les molécules pouvant convenir, il faut citer la 2-Méthyl 4-Nitro-aniline (MNA) qui possède une bonne susceptibilité non linéaire et est assez soluble. La MNA est sublimée à raison de 1g/h environ à 90°C et sous $2.10^{-5}$ mbar, puis est introduite dans la rampe de purification, comme décrit dans le brevet français n° 2 557 495, lequel est inclus par référence dans la présente demande. Le taux de MNA peut être choisi entre 1 et 15 % en poids de polymère de coeur formé, et préférentiellement entre 5 et 10 %. A titre d'exemple, un mélange de 5 % de MNA dans du polyméthylméthacrylate possède une susceptibilité $X^{(3)}$ de $5,5.10^{-21}$ MKSA contre $3,3.10^{-23}$ MKSA pour la silice à 1 $\mu$m environ de longueur d'onde optique. Le mélange polymérisable contient également des réactifs comme un amorceur de polymérisation, du ditertiobutylperoxyde à raison de quelques 0,1 à 10 pour mille mole par mole de comonomères, et un agent de transfert jouant le rôle de piège pour les radicaux libres qui pourraient attaquer la MNA. L'agent de transfert, qui peut être par exemple un mercaptan comme le laurylmercaptan ou le n-butylmercaptan, doit être dosé de façon à éviter l'inhibition de la polymérisation par la MNA, la réticulation et la transformation des sites actifs.

Lorque tous les constituants sont réunis dans un tube réacteur, celui-ci est mis dans un bain thermostaté à 80°C et laissé 4 à 6 jours pour atteindre le taux de conversion de polymère convenable. De façon à ne pas dégrader les sites actifs au cours de la polymérisation, il est important de bien réguler la température.

Après polymérisation, le barreau cylindrique 11 de coeur a, de préférence, un diamètre $D_1$ de 5 mm. Si le diamètre initial est supérieur à cette valeur, le barreau est étiré à chaud pour ramener son diamètre à 5 mm.

Conformément au procédé décrit dans le brevet français 2 557 495, le barreau cylindrique 11 est ensuite enrobé à l'aide d'une gaine optique 12 en un polymère de gaine, pour former une première préforme 10 de diamètre $D_2$ selon les étapes suivantes :

- on nettoie ce barreau cylindrique par le monomère de gaine distillé dans une unité de distillation cryogénique,
- au bout de l'unité de distillation, on place le barreau cylindrique 11 dans une cavité cylindrique de façon que les grands axes du barreau et de la cavité coïncident sensiblement, et on met l'ensemble barreau/cavitié sous vide primaire,
- on remplit l'espace existant entre les parois internes de la cavité et le barreau d'un mélange à polymériser du polymère de gaine,
- on polymérise le mélange,
- on prélève ensuite la première préforme 10 ainsi obtenue.

Quel que soit le polymère choisi pour constituer la gaine optique, la composition de ce polymère doit être adaptée pour respecter l'ouverture numérique compatible avec l'unimodalité du guide à la longueur d'onde d'utilisation. Plus précisément, la condition d'unimodalité impose que la fréquence normalisée V du guide, donnée par :

$$V = \pi \, d_c \, (n_c^2 - n_g^2)^{1/2} / \lambda \quad (1)$$

soit inférieure ou égale à 2,4. Dans cette formule, $\lambda$ est la longueur d'onde, $n_c$ et $n_g$ les indices respectifs du coeur et de la gaine et $d_c$ le diamètre final du coeur. Pour une longueur d'onde de 0,8 $\mu$m, un diamètre $d_c$ de 5 $\mu$m, et un indice de coeur de 1,5, la différence d'indice $n_c - n_g$ doit être au plus de $5.10^{-3}$.

D'une façon générale, la MNA augmente l'indice du polymère auquel elle a été ajoutée. On peut donc prévoir que le polymère de gaine est identique au polymère de coeur, la MNA suffisant à procurer la différence d'indice $n_c-n_g$ nécessaire. Il est aussi possible d'obtenir le polymère de gaine par polymérisation du mélange polymérisable de coeur, copolymérisé avec un monomère possédant un indice de réfraction très bas comme un méthacrylate d'ester fluoré, un styrène pentafluoré ou un vinylcarbonate fluoré, dont la quantité est ajustée de sorte que $n_c-n_g$ soit voisin de la valeur désirée.

Il est avantageux que le rapport des diamètres $D_2/D_1$ soit supérieur ou égal à 2 pour que la gaine optique purifiée couvre tout le mode en propagation. Mais, à cause de l'effet solvant du monomère sur le barreau cylindrique 11 de diamètre $D_1$, $D_2/D_1$ doit être inférieur à une certaine limite : si le polymère de coeur est du polyméthacrylate de méthyle et si le polymère de gaine est un comonomère à base de méthacrylate de méthyle à plus de 90 % par exemple, $D_2/D_1$ doit être inférieur à 5.

Comme l'indique la figure 1c, la première préforme 10 est ensuite emboîtée dans un premier tube 20 de diamètre intérieur $D_2$ et de diamètre extérieur $D_3$, en un troisième polymère, dit polymère de tube. Les polymères de tube utilisés doivent avoir des températures de fibrage et de transition vitreuse compatibles avec celles du polymère de coeur. Il n'y a pas de conditions particulières sur leur indice de réfraction, car ils ne servent que de matériau de renfort. Pour des raisons de facilité d'usinage du premier tube 20, le rapport $D_3/D_2$ est choisi au moins égal à 1,25.

Une seconde préforme 30 (figure 1d) de diamètre $D_4$ est ensuite réalisée par étirage partiel du premier tube 20 contenant la première préforme 10. Pour les mêmes raisons que le diamètre $D_1$, le diamètre final $D_4$ est pris au moins égal à 4 mm, 5 mm par exemple.

Il est préférable également, pour obtenir des barreaux de longueur suffisante et de diamètre régulier, que la réduction de $D_3$ en $D_4$ soit telle que $D_3/D_4 \geq 4$.

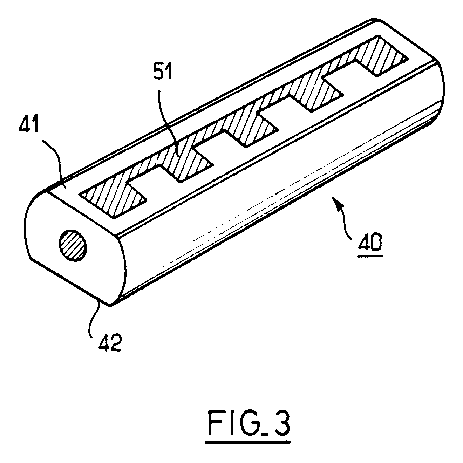

La seconde préforme 30 est emboîtée à son tour (figure 1e)) dans un second tube 40 de diamètre intérieur $D_4$ et de diamètre extérieur $D_5$, réalisé en polymère de tube. La préforme obtenue 40 subit alors une préparation destinée à aménager des moyens de mise en place des électrodes de polarisation de la substance électrooptiquement active. Dans l'exemple de réalisation de la figure 1f), lesdits moyens de mise en place sont des méplats 41 et 42 diamétralement opposés, obtenus par fraisage du tube 40. A titre indicatif, à partir d'un diamètre $D_5$ initial de 25 mm, le fraisage réduit le deuxième tube 40 à une plaque de 3,6 à 11 mm environ d'épaisseur. Cette plaque est ensuite fibrée (étape non représentée) à des températures de l'ordre de 200 à 240°C selon la masse molaire moyenne du polymère jusqu'à obtenir le diamètre de coeur $d_c$ voulu soit 5 $\mu$m environ. La fibre monomode ainsi réalisée a un diamètre de 140 $\mu$m pour un méplat d'une épaisseur de 20 à 60 $\mu$m. Enfin, une dernière étape du procédé a pour but de réaliser les électrodes de polarisation, par exemple par évaporation métallique sous vide sur les méplats de la libre monomode obtenue. La figure 3 montre une telle fibre munie de ses électrodes de polarisation et d'excitation.

Dans une variante d'exécution du procédé selon l'invention illustrée à la figure 1g), les moyens de mise en place des électrodes sont des trous 43, 44 symétriques percés parallèlement à l'axe du second tube 40. Les électrodes sont réalisées en injectant un alliage métallique dans lesdits trous longitudinaux. Par exemple, après fibrage, un alliage conducteur à bas point de fusion, comme InGa par exemple, est introduit dans les trous de façon à constituer les électrodes de polarisation.

De préférence, ledit alliage métallique présente un point de fusion inférieur à 20°C au moins et 40°C au plus à la température de transition vitreuse du polymère de gaine.

Il est bien entendu que la réalisation de moyens de mise en place, méplats 41, 42 ou trous 43, 44, n'est pas nécessaire si l'efficacité non linéaire de la substance active est importante ou si la longueur d'interaction est grande. Dans ce cas, les électrodes sont directement déposées sur la paroi extérieure cylindrique du guide.

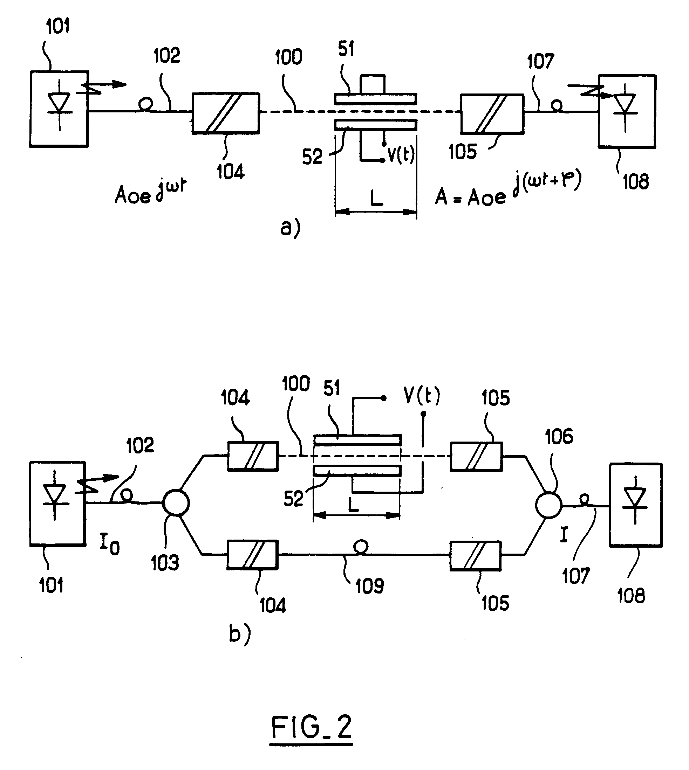

La figure 2 montre deux schémas de montage dans lesquels un guide 100 d'onde optique, fabriqué conformément au procédé décrit en regard de la figure 1, est mis en oeuvre de façon à produire une modulation, par effet électrooptique, d'une onde lumineuse transmise le long d'un réseau de fibres optiques.

La figure 2a) est un dispositif de modulation de phase comprenant une source 101 émettant une onde dont l'amplitude est donnée par

$$Ao\ e^{j\omega t}$$

Cette onde est envoyée dans une première libre optique 102 reliée, par un connecteur 104, au guide 100 d'onde optique représenté en trait pointillé. Comme l'indique la figure 2, le guide 100 est soumis sur une longueur L à un champ électrique engendré par la tension variable V(t) appliquée aux électrodes 51, 52. L'effet électrooptique prenant naissance à l'intérieur du guide 100 produit une variation de phase de l'onde lumineuse, de sorte que l'amplitude de la lumière au niveau du photodétecteur 108, après transmission le long de la libre 107 reliée au guide par le connecteur 105, s'écrit

$$A = A_0\, ^{j(\omega t + \phi)}$$

Dans le cas de l'effet Kerr, le déphasage $\phi$ en fonction du champ électrique appliqué E(t) vérifie la relation :

$$\phi(t) = (2\pi B)LE^2(t)$$

où B est la constante de Kerr qui fait intervenir la susceptibilité d'ordre 3, $X^{(3)}$, du milieu.

Lorsque l'effet électrooptique prédominant est l'effet Pockels, $\phi$ est donné par :

$$\phi(t) = (2\pi P_0)LE(t)$$

$P_0$ étant la constante de Pockels mettant en jeu la susceptibilité d'ordre 2, $X^{(2)}$, du matériau.

En tout état de cause l'effet Pockels avec ces matériaux sera plus performant (tension de commande faible et bande passante élevée car la longueur d'interaction électrooptique est plus faible et car les phénomènes peuvent être purement électroniques), mais il nécessite au préalable une orientation des groupements organiques non linéaires et la stabilisation de cette orientation.

L'effet Kerr, bien que moins performant, ne nécessite pas cette étape technologique et, à titre d'exemple, quelques performances sont résumées dans le tableau suivant :

|  | V (volt) | $\phi$ (rad) |
|---|---|---|
| L = 10 cm | 10<br>150 | $3,5 \times 10^{-3}$<br>0,8 |
| L = 20 cm | 10<br>100 | $7 \times 10^{-3}$<br>0,7 |

Comme le montre la figure 2b), la modulation de phase résultant du montage de la figure 2a) peut être transformée en modulation d'intensité par interférence entre l'onde ayant traversé le guide 100 d'onde optique et une onde de référence transmise par une fibre optique 109 placée en parallèle sur le guide entre un premier 103 et un deuxième 106 coupleurs. La lumière arrivant sur le photodétecteur 108 à une intensité I reliée à l'intensité incidente Io par =

$$I(t) = \frac{I_0}{2}\left[1 + \cos(2\pi\, BLE^2(t))\right] \text{ pour l'effet Kerr}$$

et

$$I(t) = \frac{I_0}{2}\left[1 + \cos(2\pi P_0 LE(t))\right] \text{ pour l'effet Pockels.}$$

On peut voir sur les formules précédentes que les effets obtenus sont d'autant plus importants que la longueur d'interaction L est grande. Toutefois, certaines limitations doivent être apportées à la longueur du guide, notamment en ce qui concerne l'atténuation. Celle-ci étant de l'ordre de 0,01 dB/cm à 0,1 dB/cm pour $\lambda = 0,85\ \mu$m et $\lambda = 1,32\ \mu$m, une longueur de 10 à 50 cm est tolérable. D'autre part, il faut également tenir compte de la bande passante, à cause du temps de transit de l'onde qui est de 5 ns par mètre de guide, et surtout à cause du temps de réponse du circuit du fait de l'effet capacitif du dispositif d'excitation. Il faut alors réduire la largeur des électrodes.

Dans la perspective d'atteindre une bande passante la plus large possible, il est préférable d'utiliser l'effet Pockels plutôt que l'effet Kerr, limité en fréquence à quelques mégahertz. L'effet Pockels mettant en jeu la susceptibilité d'ordre 2 qui n'est accessible que dans les milieux non controsymétriques, il est en général nécessaire, après avoir obtenu la fibre monomode, d'orienter à chaud les molécules de la substance électrooptiquement active à l'intérieur du coeur, par exemple à 80°C pendant 24 heures dans du polyméthylméthacrylate, sous un champ électrique de 0,5 MV/cm que l'on maintient jusqu'au retour à la température ambiante. On peut ainsi obtenir une modulation à 100 % avec 10 cm de longueur L d'interaction, 20 $\mu$m d'espacement entre les électrodes et 10 à 20 V de tension de commande, à 1 $\mu$m de longueur d'onde. Le matériau ainsi orienté est, de préférence, stabilisé par réticulation entre les chaînes portant les molécules actives. Cette tension de commande peut descendre à 2 V avec des systèmes de polymères décrits par L. Li et al dans l'Article "An all fiber electrooptic Kerr modulation" paru dans IEEE Colloquium on "Advanced fiber waveguide devices" N° 1986/79, London, 20 May 1986. D'une façon générale, on pourra obtenir une faible tension de commande avec des molécules actives présentant à la longueur d'onde considérée une susceptibilité d'ordre 2 supérieure à $3,3.10^{-14}$ MKSA, ou une susceptibilité d'ordre 3 supérieure à $1,1.10^{-19}$ MKSA.

Dans le cas d'une susceptibilité d'ordre 2 supérieure à $3,3.10^{-14}$ MKSA, l'orientation des molécules peut être stabilisée par réticulation.

**Revendications**

1. Procédé de fabrication d'un guide d'onde optique cylindrique en polymère comportant les étapes de :
   - réalisation d'un barreau cylindrique (11) de coeur par polymérisation d'un mélange polymérisable comprenant notamment un polymère de coeur,
   - constitution d'une première préforme (10) par enrobage du barreau cylindrique (11) de coeur à l'aide d'une gaine optique (12) formée par un polymère de gaine,
   caractérisé en ce que le mélange polymérisable du barreau cylindrique (11) de coeur comporte également une substance organique électrooptiquement active telle que le coeur présente une activité optique sous l'action d'un champ électrique extérieure, ledit guide d'onde étant monomode et permettant une modulation, par effet électrooptique, de l'onde lumineuse qu'il transmet, ledit procédé comportant en outre les étapes suivantes :
   - emboîtement de ladite première préforme dans un premier tube constitué par un polymère de tube,
   - réalisation d'une deuxième préforme par étirage partiel du premier tube contenant la première préforme,
   - emboîtement de la deuxième préforme dans un deuxième tube en polymère de tube,
   - fibrage du deuxième tube ainsi préparé jusqu'à ce que le diamètre de coeur ait la dimension requise pour que le guide d'onde optique obtenu soit monomode,
   - réalisation d'électrodes de polarisation et d'excitation de la substance électrooptiquement active.

2. Procédé selon la revendication 1, caractérisé en ce que l'étape de fibrage du deuxième tube est précédée d'une étape de préparation dudit deuxième tube (40), destiné à réaliser des moyens (41, 42, 43, 44) de mise en place desdites électrodes (51, 52) de polarisation et d'excitation.

3. Procédé selon l'une des revendications 1 ou 2, caractérisé en ce que le polymère de coeur est choisi parmi les polymères suivants : les polymères méthacryliques, $\alpha$-haloacrylates et styréniques, les carbonates et carbonates de vinyle.

4. Procédé selon l'une quelconque des revendications 1 à 3, caractérisé en ce que le polymère de gaine est identique au polymère de coeur.

5. Procédé selon l'une quelconque des revendications 1 à 3, caractérisé en ce que le polymère de gaine est obtenu par polymérisation du mélange polymérisable de coeur, copolymérisé avec un monomère possédant un indice de réfraction très bas.

6. Procédé selon la revendication 5, caractérisé en ce que ledit monomère possédant un indice de réfraction très bas est choisi parmi les monomères suivants : méthacrylate d'ester fluoré, styrène pentafluoré, vinylcarbonate fluoré.

7. Procédé selon l'une quelconque des revendications 1 à 6, caractérisé en ce que la substance organique électrooptiquement active est composée d'une molécule telle que le polymère de coeur présente une susceptibilité d'ordre 3 supérieure à $1,1.10^{-19}$ MKSA à la longueur d'onde considérée.

**8.** Procédé selon l'une quelconque des revendications 1 à 6, caractérisé en ce que, une fois la fibre monomode obtenue, les molécules de la substance organique électrooptiquement active à l'intérieur du coeur sont orientées à une température proche de la température de transition vitreuse du polymère de coeur sous l'action d'un champ électrique qui est ensuite maintenu jusqu'au retour à la température ambiante.

**9.** Procédé selon la revendication 8, caractérisé en ce que la substance organique électrooptiquement active est composée d'une molécule telle que le polymère de coeur présente, après orientation, une susceptibilité d'ordre 2 supérieure à $3,3.10^{-14}$ MKSA à la longeur d'onde considérée.

**10.** Procédé selon la revendication 9, caractérisé en ce que l'orientation desdites molécules est stabilisée par réticulation.

**11.** Procédé selon l'une quelconque des revendications 1 à 10, caractérisé en ce que le mélange polymérisable de coeur contient un agent de transfert inhibiteur de radicaux libres.

**12.** Procédé selon l'une quelconque des revendications 1 à 11, caractérisé en ce que la préparation du deuxième tube consiste à réaliser deux méplats diamétralement opposés constituant lesdits moyens de mise en place des électrodes.

**13.** Procédé selon la revendication 12, caractérisé en ce que les électrodes sont déposées, par évaporation métallique sous vide, sur les méplats du guide monomode obtenu.

**14.** Procédé selon l'une quelconque des revendications 1 à 11, caractérisé en ce que la préparation du deuxième tube consiste à réaliser deux trous longitudinaux symétriques constituant lesdits moyens de mise en place des électrodes.

**15.** Procédé selon la revendication 14, caractérisé en ce que les électrodes sont réalisées en injectant un alliage métallique dans lesdits trous longitudinaux.

**16.** Procédé selon la revendication 15, caractérisé en ce que ledit alliage métallique présente un point de fusion inférieur de 20°C au moins et 40°C au plus à la température de transition vitreuse du polymère de gaine.

**17.** Guide d'onde optique cylindrique monomode en polymère, un tel guide permettant une modulation par effet électrooptique, de l'onde lumineuse qu'il transmet, caractérisé en ce qu'il comporte :
   - un coeur (11) constitué par un mélange comprenant notamment un polymère de coeur et une substance organique électrooptiquement active telle que le coeur présente une activité optique sous l'action d'un champ électrique extérieur, le diamètre ($d_c$) de coeur ayant la dimension requise pour que le guide d'onde optique soit monomode,
   - une gaine optique (40) en polymère de gaine entourant le coeur,
   - des électrodes (51, 52) de polarisation et d'excitation de la substance optiquement active.

**18.** Guide d'onde optique selon la revendication 17, caractérisé en ce que le polymère de coeur est choisi parmi les polymères suivants : les polymères méthacryliques, $\alpha$-haloacrylates et styréniques, les carbonates et carbonates de vinyle.

**19.** Guide d'on optique selon l'une des revendications 17 ou 18, caractérisé en ce que le polymère de gaine est identique au polymère de coeur.

**20.** Guide d'onde optique selon l'une quelconque des revendications 17 ou 18, caractérisé en ce que le polymère de gaine est obtenu par polymérisation du mélange polymérisable de coeur, copolymérisé avec un monomère possédant un indice de réfraction très bas.

**21.** Guide d'onde optique selon la revendication 20, caractérisé en ce que ledit monomère possédant un indice de réfraction très bas est choisi parmi les monomères suivants : méthacrylate d'ester fluoré, styrène pentafluoré, vinylcarbonate fluoré.

**22.** Guide d'onde optique selon l'une quelconque des revendications 17 à 21, caractérisé en ce que la substance organique électrooptiquement active est composée d'une molécule telle que le polymère de coeur présente une susceptibilité d'ordre 3 supérieure à $1,1.10^{-19}$ MKSA à la longueur d'onde considérée.

**23.** Guide d'onde optique selon l'une quelconque des revendications 17 à 21, caractérisé en ce que la substance organique électrooptiquement active est composée d'une molécule telle que le polymère de coeur présente, après orientation, une susceptibilité d'ordre 2 supérieure à $3,3.10^{-14}$ MKSA à la longeur d'onde considérée.

**24.** Guide d'onde optique selon l'une quelconque des revendications 17 à 23, caractérisé en ce que lesdites électrodes sont constituées par des couches métalliques déposées sur des méplats diamétralement opposés réalisés sur ledit guide d'onde optique.

**25.** Guide d'onde optique selon l'une quelconque des revendications 17 à 23, caractérisé en ce que lesdites électrodes sont constituées par des trous longitudinaux réalisés dans le polymère de gaine et remplis d'un alliage métallique.

**26.** Guide d'onde optique selon la revendication 25, caractérisé en ce que ledit alliage métallique présente un point de fusion inférieur de 20 °C au moins et 40 °C au plus à la température de transition vitreuse du polymère de gaine.

**Claims**

**1.** Process for manufacturing a cylindrical optical waveguide made of a polymer comprising the steps of:
- producing a cylindrical core rod (11) by polymerization of a polymerizable mixture comprising especially a core polymer,
- forming a first preform (10) by coating the cylindrical core rod (11) by means of an optical cladding (12) formed by a cladding polymer,

characterized in that the polymerizable mixture of the cylindrical core rod (11) also comprises an electrooptically active organic substance such that the core exhibits an optical activity under the action of an external electric field, the said waveguide being monomode and allowing the light wave it transmits to be modulated by an electrooptical effect, the said process further comprising the following steps:
- fitting the said first preform into a first jacket constituted by a jacket polymer,
- producing a second preform by partial drawing of the first jacket containing the first preform,
- fitting the second preform into a second jacket made of a jacket polymer,
- fibre-drawing the second jacket thus prepared until the core diameter has the required dimension in order for the optical waveguide obtained to be monomode,
- producing electrodes for polarization and excitation of the electrooptically active substance.

**2.** Process according to Claim 1, characterized in that the fibre drawing step of the second jacket is preceded by a preparation step of the said second jacket (40), intended to produce means (41, 42, 43, 44) for positioning the said polarization and excitation electrodes (51, 52).

**3.** Process according to either of Claims 1 and 2, characterized in that the core polymer is chosen from among the following polymers: methacrylic polymers, $\alpha$-haloacrylates and styrenics, carbonates and vinyl carbonates.

**4.** Process according to any one of Claims 1 to 3, characterized in that the cladding polymer is identical to the core polymer.

**5.** Process according to any one of Claims 1 to 3, characterized in that the cladding polymer is obtained by polymerization of the polymerizable core mixture, copolymerized with a monomer possessing a very low refractive index.

**6.** Process according to Claim 5, characterized in that the said monomer possessing a very low refractive index is chosen from among the following monomers: fluorinated methacrylate ester, pentafluorostyrene, fluorinated vinyl carbonate.

7. Process according to any one of Claims 1 to 6, characterized in that the electrooptically active organic substance is composed of a molecule such that the core polymer exhibits a 3rd order susceptibility greater than $1.1 \times 1.10^{-19}$ MKSA at the wavelength in question.

8. Process according to any one of Claims 1 to 6, characterized in that, once the monomode fibre is obtained, the molecules of the electrooptically active organic substance within the core are oriented at a temperature close to the glass transition temperature of the core polymer under the action of an electric field which is subsequently held until the return to ambient temperature.

9. Process according to Claim 8, characterized in that the electrooptically active organic substance is composed of a molecule such that the core polymer exhibits, after orientation, a 2nd order susceptibility greater than $3.3 \times 10^{-14}$ MKSA at the wavelength in question.

10. Process according to Claim 9, characterized in that the orientation of the said molecules is stabilized by crosslinking.

11. Process according to any one of Claims 1 to 10, characterized in that the polymerizable core mixture contains a free radical inhibiting transfer agent.

12. Process according to any one of Claims 1 to 11, characterized in that the preparation of the second jacket consists in producing two diametrically opposed flats forming the said means for positioning the electrodes.

13. Process according to Claim 12, characterized in that the electrodes are deposited by metallic evaporation under vacuum onto the flats of the monomode guide obtained.

14. Process according to any one of Claims 1 to 11, characterized in that the preparation of the second jacket consists in producing two symmetrical longitudinal holes forming the said means for positioning the electrodes

15. Process according to Claim 14, characterized in that the electrodes are produced by injecting a metallic alloy into the said longitudinal holes.

16. Process according to Claim 15, characterized in that the said metallic alloy exhibits a melting point at least 20°C and not more than 40°C below the glass transition temperature of the cladding polymer.

17. Monomode cylindrical optical waveguide made of a polymer, such a guide permitting a modulation, by electrooptic effect, of the light wave which it transmits, characterized in that it comprises:
   - a core (11) formed by a mixture comprising especially a core polymer and an electrooptically active organic substance such that the core exhibits an optical activity under the action of an external electric field, the core diameter ($d_c$) having the required dimension in order for the optical waveguide to be monomode,
   - an optical cladding (40) made of a cladding polymer surrounding the core,
   - electrodes (51, 52) for polarization and excitation of the optically active substance.

18. Optical waveguide according to Claim 17, characterized in that the core polymer is chosen from among the following polymers: methacrylic, $\alpha$-haloacrylate and styrenics, carbonate and vinyl carbonate polymers.

19. Optical waveguide according to either of Claims 17 and 18, characterized in that the cladding polymer is identical to the core polymer.

20. Optical waveguide according to either of Claims 17 and 18, characterized in that the cladding polymer is obtained by polymerization of the polymerizable core mixture, copolymerized with a monomer possessing a very low refractive index.

21. Optical waveguide according to Claim 20, characterized in that the said monomer possessing a very low refractive index is chosen from among the following monomers: fluorinated methacrylate ester, pentafluorostyrene, fluorinated vinyl carbonate.

22. Optical waveguide according to any one of Claims 17 to 21, characterized in that the electrooptically active organic substance is composed of a molecule such that the core polymer exhibits a 3rd order susceptibility greater than $1.1 \times 10^{-19}$ MKSA at the wavelength in question.

23. Optical waveguide according to any one of Claims 17 to 21, characterized in that the electrooptically active organic substance is composed of a molecule such that the core polymer exhibits, after orientation, a 2nd order susceptibility greater than $3.3 \times 10^{-14}$ MKSA at the wavelength in question.

24. Optical waveguide according to any one of Claims 17 to 23, characterized in that the said electrodes are formed by metallic layers deposited onto diametrically opposed flats produced on the said optical waveguide.

25. Optical waveguide according to any one of Claims 17 to 23, characterized in that the said electrodes are formed by longitudinal holes produced in the cladding polymer and filled with a metallic alloy.

26. Optical waveguide according to Claim 25, characterized in that the said metallic alloy exhibits a melting point at least 20°C and not more than 40°C below the glass transition temperature of the cladding polymer.

**Patentansprüche**

1. Verfahren zur Fertigung eines zylindrischen Lichtwellenleiters aus Polymer, das aus den folgenden Schritten besteht:
   - Herstellung eines zylindrischen Kernstabes (11) durch Polymerisation einer polymerisierbaren Mischung mit einem insbesondere Kernpolymer,
   - Herstellen einer ersten Vorform (10) durch Umhüllung des zylindrischen Kernstabes (11) mit einer optischen Hülle (12) aus einem Hüllpolymer,
   dadurch gekennzeichnet, daß die polymerisierbare Mischung des zylindrischen Kernstabs (11) auch eine elektrooptisch aktive organische Substanz enthält, so daß der Kern unter der Einwirkung eines äußeren elektrischen Feldes optisch aktiv ist, wobei dieser Wellenleiter ein Monomode-Wellenleiter ist und eine Modulation der von ihm übertragenen Lichtwelle durch einen elektrooptischen Effekt ermöglicht, wobei dieses Verfahren ferner aus den folgenden Schritten besteht:
   - Einfügen der ersten Vorform in eine aus einem Röhrenpolymer bestehende erste Röhre,
   - Herstellung einer zweiten Vorform durch teilweises Ausziehen der die erste Vorform enthaltenden ersten Röhre,
   - Einfügen der zweiten Vorform in eine zweite Röhre aus einem Röhrenpolymer,
   - Ausziehen der so hergestellten zweiten Röhre zu einer Faser, bis der Kerndurchmesser die erforderliche Abmessung hat, damit der erhaltene Lichtwellenleiter im Monomodebetrieb arbeitet,
   - Herstellung von Polarisations- und Erregerelektroden für die elektrooptisch aktive Substanz.

2. Verfahren nach Anspruch 1, dadurch gekennzeichnet, daß vor dem Ausziehen der zweiten Röhre zu einer Faser diese zweite Röhre (40) dergestalt vorbearbeitet wird, daß Mittel (41, 42, 43, 44) für das Anbringen der Polarisations- und Erregerelektroden (51, 52) geschaffen werden.

3. Verfahren nach einem der Ansprüche 1 oder 2, dadurch gekennzeichnet, daß das Kernpolymer aus einem der folgenden Polymere ausgewählt ist: Methacryl-Polymere, α-Halogenacrylate und Styrole, Carbonate und Vinylcarbonate.

4. Verfahren nach einem der Ansprüche 1-3, dadurch gekennzeichnet, daß das Hüllpolymer identisch mit dem Kernpolymer ist.

5. Verfahren nach einem der Ansprüche 1-3, dadurch gekennzeichnet, daß das Hüllpolymer durch Polymerisation der polymerisierbaren Kernmischung und Copolymerisation mit einem Monomer mit einem sehr niedrigen Brechungsindex erhalten wird.

6. Verfahren nach Anspruch 5, dadurch gekennzeichnet, daß dieses Monomer mit einem sehr niedrigen Brechungsindex aus einem der folgenden Momomere ausgewählt ist: fluoriertes Estermethacrylat, pentafluoriertes Styrol, fluoriertes Vinylkarbonat.

7. Verfahren nach einem der Ansprüche 1-6, dadurch gekennzeichnet, daß die elektrooptisch aktive organische Substanz aus einem solchen Molekül besteht, daß das Kernpolymer eine um den Faktor 3 höhere Suszeptibilität als $1,1.10^{-19}$ MKSA bei der jeweiligen Wellenlänge besitzt.

8. Verfahren nach einem der Ansprüche 1-6, dadurch gekennzeichnet, daß nach Erhalt der Monomodefaser die Moleküle der elektrooptisch aktiven organischen Substanz im Kerninneren bei einer Temperatur, die fast der Glasübergangstemperatur des Kernpolymers entspricht, unter der Wirkung eines elektrischen Feldes, das sodann bis zur Rückkehr zur Umgebungstemperatur beibehalten wird, orientiert werden.

9. Verfahren nach Anspruch 8, dadurch gekennzeichnet, daß die elektrooptisch aktive organische Substanz aus einem solchen Molekül besteht, daß das Kernpolymer nach der Orientierung eine um einen Faktor 2 höhere Suszeptibilität als $3,3.10^{-14}$ MKSA bei der jeweiligen Wellenlänge besitzt.

10. Verfahren nach Anspruch 9, dadurch gekennzeichnet, daß die Orientierung der besagten Moleküle durch Vernetzung stabilisiert wird.

11. Verfahren nach einem der Ansprüche 1-10, dadurch gekennzeichnet, daß die polymerisierbare Kernmischung einen Radikalübertragungshemmer enthält.

12. Verfahren nach einem der Ansprüche 1-11, dadurch gekennzeichnet, daß bei der Vorbereitung der zweiten Röhre zwei diametral entgegengesetzte Abflachungen geschaffen werden, die für die Anbringung der Elektroden dienen.

13. Verfahren nach Anspruch 12, dadurch gekennMonomodezeichnet, daß die Elektroden durch Vakuum-Metallverdampfung auf den Abflachungen des erhaltenen Monomode-Wellenleiters abgeschieden werden.

14. Verfahren nach einem der Ansprüche 1-11, dadurch gekennzeichnet, daß bei der Vorbereitung der zweiten Röhre zwei symmetrische Längslöcher für die Anbringung der Elektroden geschaffen werden.

15. Verfahren nach Anspruch 14, dadurch gekennzeichnet, daß die Elektroden durch Einspritzen einer Metallegierung in diese Längslöcher hergestellt werden.

16. Verfahren nach Anspruch 15, dadurch gekennzeichnet, daß diese Metallegierung einen Schmelzpunkt besitzt, der mindestens 20°C und höchstens 40°C unter der Glasübergangstemperatur des Hüllpolymers liegt.

17. Zylindrischer Monomode-Lichtwellenleiter aus Polymer, der eine Modulation der von ihm übertragenen Lichtwelle durch einen elektrooptischen Effekt ermöglicht, dadurch gekennzeichnet ist, daß er folgendes umfaßt:
    - einen Kern (11) aus einer Mischung aus insbesondere einem Kernpolymer und einer elektrooptisch aktiven organischen Substanz, so daß der Kern unter der Wirkung eines äußeren elektrischen Feldes optisch aktiv ist, wobei der Durchmesser ($d_c$) des Kerns die dazu erforderliche Abmessung hat, daß der Lichtwellenleiter ein Monomodeleiter ist,
    - eine optische Hülle (40) aus einem Hüllpolymer um den Kern,
    - Polarisations- und Erregerelektroden (51, 52) für die optisch aktive Substanz.

18. Lichtwellenleiter nach Anspruch 17, dadurch gekennzeichnet, daß das Kernpolymer aus einem der folgenden Polymere ausgewählt ist: Methacryl-Polymere, $\alpha$-Halogenacrylate und Styrole, Carbonate und Vinylcarbonate.

19. Lichtwellenleiter nach einem der Ansprüche 17 oder 18, dadurch gekennzeichnet, daß das Hüllpolymer identisch mit dem Kernpolymer ist.

**20.** Lichtwellenleiter nach einem der Ansprüche 17 oder 18, dadurch gekennzeichnet, daß das Hüllpolymer durch Polymerisation der polymerisierbaren Kernmischung und Copolymerisation mit einem Monomer mit einem sehr niedrigen Brechungsindex erhalten wird.

**21.** Lichtwellenleiter nach Anspruch 20, dadurch gekennzeichnet, daß dieses Monomer mit einem sehr niedrigen Brechungsindex aus einem der folgenden Momomere ausgewählt ist: fluoriertes Estermethacrylat, pentafluoriertes Styrol, fluoriertes Vinylcarbonat.

**22.** Lichtwellenleiter nach einem der Ansprüche 17-21, dadurch gekennzeichnet, daß die elektrooptisch aktive organische Substanz aus einem solchen Molekül besteht, daß das Kernpolymer eine um den Faktor 3 höhere Suszeptibilität als $1,1.10^{-19}$ MKSA bei der jeweiligen Wellenlänge besitzt.

**23.** Lichtwellenleiter nach einem der Ansprüche 17-21, dadurch gekennzeichnet, daß die elektrooptisch aktive organische Substanz aus einem solchen Molekül besteht, daß das Kernpolymer nach der Orientierung eine um den Faktor 2 höhere Suszeptibilität als $3,3.10^{-14}$ MKSA bei der jeweiligen Wellenlänge besitzt.

**24.** Lichtwellenleiter nach einem der Ansprüche 17-23, dadurch gekennzeichnet, daß die Elektroden aus Metallschichten bestehen, die auf den diametral entgegengesetzten Abflachungen auf dem Lichtwellenleiter aufgebracht werden.

**25.** Lichtwellenleiter nach einem der Ansprüche 17-23, dadurch gekennzeichnet, daß die Elektroden aus Längslöchern im Hüllpolymer bestehen, die mit einer Metallegierung gefüllt sind.

**26.** Lichtwellenleiter nach Anspruch 25, dadurch gekennzeichnet, daß diese Metallegierung einen Schmelzpunkt hat, der mindestens 20°C und höchstens 40°C unter der Glasübergangstemperatur des Hüllpolymers liegt.

FIG.1

a)

$Aoe^{j\omega t}$

$A = Aoe^{j(\omega t + \varphi)}$

b)

## FIG. 2

FIG. 3